# EUROPÄISCHE PATENTSCHRIFT

(11) **EP 3 315 704 B1**
(45) Veröffentlichungstag und Bekanntmachung des Hinweises auf die Patenterteilung: **04.11.2026**
(21) Anmeldenummer: 17193715.4
(22) Anmeldetag: 28.09.2017
(51) Int. Cl.: E05F 15/63

(54) **ÜBERWACHUNGSSYSTEM**
MONITORING SYSTEM
SYSTÈME DE SURVEILLANCE

(30) Priorität: 28.10.2016 DE 102016221339
(43) Veröffentlichungstag der Anmeldung: 02.05.2018
(73) Patentinhaber: GEZE GmbH, 71229 Leonberg (DE)
(72) Erfinder: Hucker, Matthias, 76359 Marxzell (DE)

(56) Entgegenhaltungen:
- WO-A1-2015/175614
- DE-A1- 102011 055 491
- US-A1- 2013 186 001
- US-A1- 2014 182 206

## Beschreibung

Die Erfindung betrifft ein System zur Überwachung sicherheitsrelevanter Funktionen eines Türschließers für den Flügel einer insbesondere als Brandschutzabschluss dienenden Tür, eines Fensters oder dergleichen.

Türschließer für Türen oder Fenster sind allgemein bekannt und können mit hydraulischer und/oder generatorischer Dämpfung ausgeführt sein. Entsprechende Türschließer sind beispielsweise aus der US 2014/0182206 A1, WO 2015/175614 A1, US 2013/0186001 A1 oder DE 10 2011 055 491 A1 bekannt. **,|** In bekannter Weise umfasst ein derartiger Türschließer in der Regel ein Gehäuse, in dem ein Arbeitskolben verschiebbar geführt ist, der mit einer Abtriebswelle getriebemäßig zusammenwirkt. Auf der Abtriebswelle kann ein Gestänge oder ein Gleitarm drehfest angeordnet sein. Der Türschließer kann wahlweise an einem Flügel der Tür oder des Fensters oder an einer feststehenden Umrahmung angeordnet sein. Entsprechend stützt sich das Gestänge bzw. der Gleitarm am Rahmen oder dem Flügel ab, wodurch eine Verbindung zwischen der Schwenkbewegung des Flügels und dem Türschließer bewirkt wird. Insbesondere bei Bodentürschließern kann die Abtriebswelle des Türschließers auch direkt mit der Drehachse eines Drehflügels gekoppelt sein.

Türschließer werden häufig auch an Brandschutzabschlüssen wie beispielsweise Brand- oder Rauchschutztüren montiert, damit im Brandfall der betreffende Brandschutzabschluss bzw. eine Brandschutztür sicher geschlossen wird, so dass eine Ausbreitung von Rauch oder Feuer verhindert wird. Die Türschließer umfassen in der Regel einen mechanischen Speicher, der mit dem Öffnen des Flügels geladen wird und sich zum Schließen des Flügels entlädt. Dabei kann die Schließgeschwindigkeit beispielsweise hydraulisch gedämpft werden. Die Schließgeschwindigkeit wird meistens über hydraulische Ventile und das Schließmoment über eine Vorladung des beispielsweise eine Federeinheit umfassenden mechanischen Energiespeichers eingestellt. Türschließer sind oftmals autarke Systeme, die keine Fremdenergie benötigen. In bestimmten Fällen kann auch eine generatorische Dämpfung der Schließgeschwindigkeit vorgesehen sein.

Türschließer für Brand- oder Rauchschutztüren unterliegen hohen Sicherheitsanforderungen, die größtenteils in Normen und Standards festgelegt sind. Verschiedene Ursachen können nun aber dazu führen, dass die eine oder andere dieser Sicherheitsanforderungen im Verlauf der Betriebsdauer des Türschließers nicht mehr erfüllt wird. So nimmt bei Kälte die Viskosität des in der Regel als Dämpfungsmedium verwendeten Öls ab, womit sich entsprechend die Schließzeit vergrößert. Bei Wärme tritt der umgekehrte Effekt auf. Verliert der Türschließer bzw. das Türschließer Dämpfungsmedium Öl, so schließt der zugeordnete Flügel zumindest teilweise ungedämpft. Bricht bei vorgesehener Verzahnung beispielsweise diese Verzahnung oder der Beschlag, so schließt der Türschließer überhaupt nicht mehr. Beispielsweise in Hotels ist unter anderem auch zu beobachten, dass Türschließern zugeordnete Hebel von den Gästen ausgehängt werden, was zur Folge hat, dass der betreffende Türschließer seine Funktion verliert. Es kann auch vorkommen, dass Türflügel an Brandschutztüren beispielsweise mit einem Draht oder Holzkeil in der Offenlage gehalten werden, was dazu führt, dass die Tür im Fall eines Brandes offenstehen bleibt. Zudem kann beispielsweise ein Federbruch, eine Verstellung der Vorspannung der Feder, Reibung oder dergleichen ein fehlendes Schließmoment zur Folge haben.

Der Erfindung liegt die Aufgabe zugrunde, ein System zur Überwachung sicherheitsrelevanter Funktionen eines Türschließers für den Flügel einer insbesondere als Brandschutzabschluss dienenden Tür, eines Fensters oder dergleichen anzugeben, bei dem das zuvor erwähnte Problem beseitigt ist. Dabei soll insbesondere eine möglichst umfassende und zuverlässige Überwachung der relevanten Sicherheitsfunktionen des Türschließers gewährleistet werden.

Erfindungsgemäß wird die Aufgabe durch ein System mit den Merkmalen des Anspruchs 1 gelöst. Bevorzugte Ausführungsformen des erfindungsgemäßen Systems ergeben sich aus den Unteransprüchen, der vorliegenden Beschreibung sowie der Zeichnung.

Das erfindungsgemäße System zur Überwachung sicherheitsrelevanter Funktionen eines Türschließers für den Flügel einer insbesondere als Brandschutzabschluss dienenden Tür, eines Fensters oder dergleichen umfasst eine dem Türschließer zugeordnete Sensorik zur Erfassung vorgebbarer Betriebsgrößen des Türschließers und eine mit der Sensorik in Verbindung stehende Steuer- und/oder Auswerteeinrichtung zur Überwachung der Einhaltung vorgebbarer Sicherheitsfunktionen des Türschließers anhand der von der Sensorik erfassten Betriebsgrößen. Die Sensorik umfasst wenigstens einen Positionssensor zur Erfassung der Position des durch den Türschließer beaufschlagten Flügels, sowie wenigstens einen Geschwindigkeitssensor zur Erfassung der Geschwindigkeit des durch den Türschließer beaufschlagten Flügels und/oder wenigstens einen Beschleunigungssensor zur Erfassung der Beschleunigung des durch den Türschließer beaufschlagten Flügels. Die Steuer- und/oder Auswerteeinrichtung validiert dabei die vom Positionssensor gelieferten Signale durch Einbeziehen der vom Geschwindigkeitssensor und/oder vom Beschleunigungssensor gelieferten Signale.

Aufgrund dieser Ausbildung wird ein intelligenter Türschließer oder System geschaffen, mit dem eine umfassende zuverlässige Überwachung der relevanten Sicherheitsfunktionen des Türschließers ermöglicht wird. Dabei können die von der Sensorik erfassten Betriebsgrößen des Türschließers durch die Steuer- und/oder Auswerteeinrichtung analysiert oder ausgewertet werden, um zu überprüfen, ob und inwieweit vorgegebene Sicherheitsfunktionen des Türschließers tatsächlich erfüllt werden.

Dabei sind die von der Sensorik erfassten Betriebsgrößen und/oder die Überwachungsergebnisse durch die Steuer- und/oder Auswerteeinrichtung bevorzugt protokollierbar, signalisierbar, insbesondere anzeigbar, und/oder für einen Abruf bereitstellbar.

Vorteilhafterweise werden durch die Steuer- und/oder Auswerteeinrichtung in Abhängigkeit von den Überwachungsergebnissen insbesondere auch Wartungsinformationen bereitgestellt und/oder Fehlermeldungen erzeugt.

Es können somit alle wesentlichen Sicherheitsfunktionen des Türschließers überwacht und notwendige Wartungsinformationen und gegebenenfalls anliegende Fehlermeldungen zur Verfügung gestellt werden. Die Steuer- und/oder Auswerteeinrichtung kann alles beispielsweise mit Zeitstempel in einer Log- oder Ereignisprotokolldatei protokollieren. Zudem kann die Einhaltung normativ geforderter Größen überwacht werden.

Zweckmäßigerweise umfasst das System zudem eine Kommunikationsschnittstelle für eine Ferndiagnose. Die von der Sensorik erfassten Betriebsgrößen und/oder die nach einer Auswertung durch die Steuer- und/oder Auswerteeinheit erhaltenen Überwachungsergebnisse können somit auch zentral gesammelt werden.

Die von der Steuer- und/oder Auswerteeinrichtung zu überwachenden Sicherheitsfunktionen des Türschließers können insbesondere eine vorgebbare maximale Schließzeit des durch den Türschließer beaufschlagten Flügels umfassen. Es kann somit beispielsweise überwacht werden, ob eine geöffnete Tür innerhalb einer bestimmten Zeit durch den Türschließer geschlossen wird, damit im Brandfall die Tür rechtzeitig in die Geschlossenlage überführt wird.

Zudem können die von der Steuer- und/oder Auswerteeinrichtung zu überwachenden Sicherheitsfunktionen des Türschließers insbesondere auch ein vorgebbares Schließmoment und/oder einen vorgebbaren Schließmomentverlauf umfassen. Es kann somit insbesondere auch überwacht werden, ob ein Türschließer die Tür mit dem entsprechenden Schließmoment schließt, damit die Tür im Brandfall sicher geschlossen wird. So kann beispielsweise überprüft werden, ob dies auch bei auftretendem Gegenwind, Reibung und/oder vorliegenden Druckdifferenzen der Fall ist.

Alternativ oder zusätzlich können die von der Steuer- und/oder Auswerteeinrichtung zu überwachenden Sicherheitsfunktionen des Türschließers insbesondere auch eine vorgebbare minimale Schließzeit des durch den Türschließer beaufschlagten Flügels umfassen.

So kann durch das erfindungsgemäße System bzw. den intelligenten Türschließer insbesondere auch überwacht werden, ob eine Tür während des normalen Betriebs nicht zu schnell schließt, damit durch den schließenden Türflügel niemand verletzt wird.

Gemäß einer zweckmäßigen praktischen Ausführungsform des erfindungsgemäßen Systems umfasst die Steuer- und/oder Auswerteeinrichtung einen Zyklenzähler zum Zählen der Öffnungs- und/oder Schließzyklen des durch den Türschließer beaufschlagten Flügels. Dabei kann das Zählergebnis eines solchen Zyklenzählers insbesondere zu Wartungszwecken genutzt werden.

Von Vorteil ist insbesondere, wenn die von der Sensorik erfassten Betriebsgrößen durch die Steuer- und/oder Auswerteeinrichtung zumindest teilweise kontinuierlich analysierbar sind. Durch eine entsprechende kontinuierliche Auswertung oder Analyse der von der Sensorik erfassten Betriebsgrößen durch die Steuer- und/oder Auswerteeinrichtung wird die Zuverlässigkeit der Überwachung der Sicherheitsfunktionen entsprechend erhöht.

Alternativ oder zusätzlich können die Steuer- und/oder Auswerteeinrichtung und zugeordnete Sensorik auch zur Erfassung der Betriebsdauer des Türschließers ausgeführt sein. Diese kann insbesondere wieder zu Wartungszwecken genutzt werden.

Die Steuer- und/oder Auswerteeinrichtung kann wenigstens einen Mikrocontroller oder dergleichen umfassen. Die von der Sensorik erfassten Betriebsgrößen können in diesem Fall insbesondere von dem Mikrocontroller ausgewertet oder analysiert werden.

Gemäß einer bevorzugten praktischen Ausführungsform des erfindungsgemäßen Systems ist die Sensorik und/oder die Steuer- und/oder die Auswerteeinrichtung zumindest teilweise im Türschließer integriert.

Von Vorteil ist insbesondere auch, wenn die Sensorik und/oder die Steuer- und/oder die Auswerteeinrichtung zumindest teilweise modular und insbesondere als nachrüstbares Modul ausgeführt ist. Die Sensorik und/oder Steuer- und/oder Auswerteeinrichtung kann somit auch bei einem bereits montierten Türschließer problemlos auch noch nachgerüstet werden.

Die Sensorik kann**,** neben dem Positionssensor und dem Geschwindigkeits- und/oder Beschleunigungssensor, zudem wenigstens eine oder mehrere der folgenden Sensoren umfassen:
- wenigstens einen Näherungs- und/oder Bewegungssensor, wie insbesondere einen Aktiv-Infrarot-Sensor oder dergleichen;
- wenigstens einen Sensor zur Erfassung der Zeit;
- wenigstens einen Sensor zur Erfassung des durch den Türschließer erzeugten Schließmoments;
- wenigstens einen Drucksensor zur Erfassung des Drucks in einem im Gehäuse des Türschließers enthaltenen Dämpfungsmedium, insbesondere einer Hydraulikflüssigkeit.

Der Beschleunigungssensor kann somit beispielsweise zur Erfassung einer beschleunigten Bewegung eines Türflügels genutzt werden. Ein solcher Beschleunigungssensor ist insbesondere bei einer Türblattmontage des Türschließers einfach realisierbar. Ein Aktiv-Infrarot-Sensor oder Sensor auf der Basis einer anderen Präsenztechnologie kann beispielsweise zur Erfassung einer beschleunigten Bewegung des Türflügels herangezogen werden. Ein solcher Sensor kann beispielsweise dann vorgesehen werden, wenn der Türschließer an der Zarge montiert ist. Dabei passiert bei einer bandseitigen Montage des Türschließers der Türflügel das betreffende Sensorfeld. Bei einer band- und bandgegenseitigen Montage ist zu berücksichtigen, dass auch Passanten das Sensorfeld passieren können.

Der Sensor zur Erfassung der Zeit kann beispielsweise eine Echtzeituhr umfassen oder durch die Taktfrequenz des Mikrocontrollers definiert sein.

Mittels des Positionssensors kann beispielsweise die absolute Position eines Türflügels erfasst werden. Er kann beispielsweise ein an der Abtriebs- oder Schließerwelle des Türschließers vorgesehenes Potentiometer, einen am im Gehäuse des Türschließers geführten Kolben vorgesehenen magnetischen Distanzgeber oder dergleichen umfassen.

Der Geschwindigkeitssensor kann beispielsweise einen Tachogenerator mit Getriebe umfassen. Der Sensor zur Erfassung des durch den Türschließer erzeugten Schließmoments kann beispielsweise einen Dehnmessstreifen zur Messung der Federspannung, einen Dehnmessstreifen in einer einen mit der Abtriebswelle des Türschließers gekoppelten Gleitarm führenden Gleitschiene zur Messung der Querkraft zwischen Gleitstein und Gleitschiene und/oder dergleichen umfassen. Durch den Drucksensor kann beispielsweise der Druck in einem im Gehäuse des Türschließers enthaltenen Dämpfungsmedium, z.B. Hydrauliköl, gemessen werden.

Die von der Sensorik erfassten Betriebsgrößen können durch die Steuer- und/oder Auswerteeinrichtung bzw. den Mikrocontroller kontinuierlich oder auch nur zeitweise oder periodisch ausgewertet oder analysiert werden.

Zweckmäßigerweise ist die Steuer- und/oder Auswerteeinrichtung dazu ausgeführt, durch Differentiation der durch den Positionssensor erfassten Position des durch den Türschließer beaufschlagten Flügels die Geschwindigkeit des Flügels und daraus die aktuelle Schließzeit des Flügels zu ermitteln.

Von Vorteil ist insbesondere auch, wenn die Steuer- und/oder Auswerteeinrichtung dazu ausgeführt ist, zu überprüfen, ob die erfasste bzw. ermittelte Schließzeit des durch den Türschließer beaufschlagten Flügels innerhalb eines durch eine vorgebbare minimale Schließzeit und eine vorgebbare maximale Schließzeit bestimmten Zeitintervalls liegt.

Vorteilhafterweise ist die Steuer- und/oder Auswerteeinrichtung auch dazu ausgeführt, anhand der durch den Positionssensor gelieferten Signale die Öffnungs- und/oder Schließzyklen des durch den Türschließer beaufschlagten Flügels zu zählen.

Gemäß einer bevorzugten praktischen Ausführungsform des erfindungsgemäßen Systems ist die Steuer- und/oder Auswerteeinrichtung dazu ausgeführt, anhand der durch den Positionssensor gelieferten Signale eine jeweilige Brandschutzfunktion und/oder die Schließgeschwindigkeit des durch den Türschließer beaufschlagten Flügels zu überwachen.

Gemäß einer weiteren zweckmäßigen praktischen Ausführungsform des erfindungsgemäßen Systems ist die Steuer- und/oder Auswerteeinrichtung dazu ausgeführt, die vom Positionssensor gelieferten Signale mit den vom Beschleunigungssensor und/oder mit den vom Näherungs- und/oder Bewegungssensor gelieferten Sensorsignalen insbesondere zur Erkennung eines Bruches einer Abtriebs- oder Schließerachse des Türschließers, eines Bruches im Tür- oder Fensterbeschlag, von Manipulationen am Türschließer und/oder am Beschlag und/oder dergleichen zu kombinieren.

Erfasst die Steuer- und/oder Auswerteeinrichtung bzw. der Mikrocontroller beispielsweise keine Positionsänderung der Abtriebswelle oder Schließerachse des Türschließers, muss die Verbindung zwischen Türschließer und Flügel unterbrochen sein.

Gemäß einer weiteren vorteilhaften Ausführungsform des erfindungsgemäßen Systems ist die Steuer- und/oder Auswerteeinrichtung dazu ausgeführt, die Beschleunigung des durch den Türschließer beaufschlagten Flügels durch zweifache Differentiation der durch den Positionssensor erfassten Position und/oder durch einfache Differentiation der vom Geschwindigkeitssensor erfassten Geschwindigkeit des durch den Türschließer beaufschlagten Flügels beim Schließen zu ermitteln, um daraus ein Maß für das Schließmoment zu erhalten. So ist das Drehmoment proportional zum Produkt aus der Trägheit des Flügels und der Beschleunigung des Flügels. Durch die Steuer- und/oder Auswerteeinrichtung bzw. den Mikrocontroller kann somit insbesondere auch eine Änderung des Schließmoments erkannt werden.

Mittels des Sensors zur Erfassung des durch den Türschließer erzeugten Schließmoments kann die Steuer- und/oder Auswerteeinrichtung bzw. der Mikrocontroller das Schließmoment jedoch auch direkt messen.

Gemäß einer weiteren zweckmäßigen praktischen Ausführungsform des erfindungsgemäßen Systems ist die Steuer- und/oder Auswerteeinrichtung dazu ausgeführt, anhand der vom Sensor zur Erfassung der Zeit gelieferten Signale die Verweilzeit des Flügels nach einer Öffnung in einer Ruheposition zu ermitteln, um insbesondere eine Feststellung des Flügels in der Offenlage zu detektieren.

Ist die Verweilzeit zu groß, kann davon ausgegangen werden, dass der Flügel beispielsweise durch einen Keil, ein Seil oder dergleichen in seiner geöffneten Position festgestellt ist, d.h. blockiert wurde.

Gemäß einer weiteren zweckmäßigen Ausführungsform des erfindungsgemäßen Systems ist die Steuer- und/oder Auswerteeinrichtung dazu ausgeführt, anhand des vom Drucksensor erfassten Drucks eines Dämpfungsmediums des Türschließers, eine Feststellung des Flügels in der Offenlage zu detektieren.

Mittels des Drucksensors kann somit beispielsweise bei einem hydraulischen Türschließer auch das Feststellen des Flügels in dessen Offenlage erkannt werden, da in diesem Fall die als Dämpfungsmedium vorgesehene Hydraulikflüssigkeit oder dergleichen, beispielsweise Öl, in der Regel drucklos ist.

Wie bereits angeführt, können auch das Ergebnis des Zyklenzählers sowie die ermittelte Betriebsdauer für Wartungszwecke genutzt werden.

Der Türschließer kann insbesondere einen mechanischen Energiespeicher, wie beispielsweise eine Federeinheit oder dergleichen umfassen, der mit dem Öffnen des Flügels geladen wird und sich zum Schließen des Flügels entlädt.

Der Türschließer kann mit einer hydraulischen und/oder generatorischen Dämpfung versehen sein. Die Energieversorgung der Sensorik sowie der Steuer- und/oder Auswerteeinrichtung bzw. des Mikrocontrollers kann durch das Netz und/oder eine Batterie und/oder Akkumulator erfolgen. Wie bereits ausgeführt, ist das erfindungsgemäße System nicht nur bei hydraulisch gedämpften, sondern auch bei generatorisch gedämpften Türschließern anwendbar. Bei einem generatorisch gedämpften Türschließer kann die Energieversorgung zumindest teilweise auch direkt oder gegebenenfalls akkumulatorgepuffert aus der Generatorspannung erfolgen.

Durch die Steuer- und/oder Auswerteeinrichtung kann alles oder gezielt nur ein Teil der erhaltenen Informationen protokolliert werden. Bei erfassten Manipulationen, Fehlern, einer ausstehenden Wartung und/oder dergleichen kann eine Meldung generiert werden. Dies kann beispielsweise über wenigstens eine Leuchtdiode und/oder einen Summer im Türschließer oder auch über ein Funksignal und/oder ein elektrisches Signal erfolgen, das beispielsweise an eine Wartungszentrale übermittelt werden kann.

Wie ebenfalls bereits erwähnt, kann die Türschließerüberwachung zumindest teilweise im Türschließer integriert oder eingebaut oder auch als Nachrüstmodul für bereits montierte Türschließer ausgeführt sein. Erfindungsgemäß wird somit ein intelligenter Türschließer geschaffen. Es sind auch Ferndiagramme denkbar, so dass Daten insbesondere auch zentral gesammelt werden können.

Aufgrund der erfindungsgemäßen Überwachung kann von einer normativen regelmäßigen Wartung des Türschließers abgesehen und stattdessen lediglich bei Bedarf eine Wartung vorgenommen werden.

Die Erfindung wird im Folgenden anhand von Ausführungsbeispielen unter Bezugnahme auf die Zeichnung näher erläutert; in dieser zeigen:
- Fig. 1: eine schematische Darstellung einer beispielhaften Ausführungsform eines an einem Flügel einer Tür montierten Türschließers, dessen sicherheitsrelevante Funktionen mittels eines erfindungsgemäßen Systems überwacht werden können,
- Fig. 2: eine schematische Darstellung einer beispielhaften Ausführungsform eines an einer Zarge montierten Türschließers, dessen sicherheitsrelevante Funktionen mittels eines erfindungsgemäßen Systems überwacht werden können, und
- Fig. 3: eine schematische Darstellung der Sensorik und/oder der Steuer- und/oder Auswerteeinrichtung einer beispielhaften Ausführungsform des erfindungsgemäßen Systems.

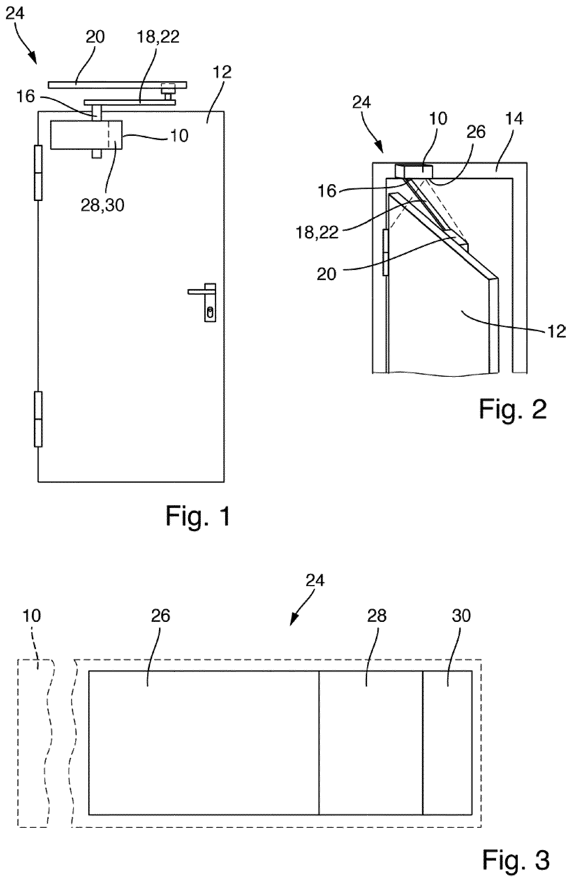

Die Fig. 1 und 2 zeigen rein beispielhaft jeweils einen Türschließer 10 für einen Flügel 12 einer Tür. Dabei ist der Türschließer gemäß Fig. 1 am Flügel 12 und gemäß der Fig. 2 an der Zarge 14 der Tür montiert. Der Türschließer 10 kann grundsätzlich jedoch auch für den Flügel eines Fensters, einer Band- oder Rauchschutzklappe oder dergleichen vorgesehen sein. Der jeweilige Türschließer 10 kann einen mechanischen Energiespeicher wie beispielsweise eine Federeinheit umfassen, der mit dem Öffnen des Flügels 12 geladen wird und sich zum Schließen des Flügels 12 entlädt. Zudem kann der Türschließer 10 mit einer hydraulischen und/oder generatorischen Dämpfung versehen sein.

Eine im Gehäuse des Türschließers 10 drehbar gelagerte Abtriebswelle 16 kann mit einer der Kraftübertragung dienenden Hebelanordnung 18 verbunden sein, die beispielsweise einen in einer Gleitschiene 20 geführten Gleitarm 22 (vgl. insbesondere Fig. 1) oder ein Gestänge umfassen kann. Insbesondere bei Bodentürschließern kann die Abtriebswelle 16 des Türschließers 10 auch unmittelbar mit der Drehachse des Flügels 12 gekoppelt sein.

Bei dem betreffenden Flügel 12 kann es sich insbesondere um einen Brandschutzabschluss handeln. Im Fall eines Türflügels kann es sich somit insbesondere um den Flügel 12 einer Brandschutztür handeln.

Das erfindungsgemäße System dient der Überwachung sicherheitsrelevanter Funktionen eines solchen Türschließers 10 für den Flügel 12 einer insbesondere als Brandschutzabschluss dienenden Tür, eines Fensters oder dergleichen. Es umfasst eine dem Türschließer 10 zugeordnete Sensorik 26 (vgl. Fig. 3) zur Erfassung vorgebbarer Betriebsgrößen des Türschließers 10 und eine mit der Sensor 26 in Verbindung stehende Steuer- und/oder Auswerteeinrichtung 28 zur Überwachung der Einhaltung vorgebbarer Sicherheitsfunktionen des Türschließers 10 anhand der von der Sensor 26 erfassten Betriebsgrößen. Die Sensorik 26 umfasst wenigstens einen Positionssensor zur Erfassung der Position des durch den Türschließer 10 beaufschlagten Flügels 12, sowie wenigstens einen Geschwindigkeitssensor zur Erfassung der Geschwindigkeit des durch den Türschließer 10 beaufschlagten Flügels 12 und/oder wenigstens einen Beschleunigungssensor zur Erfassung der Beschleunigung des durch den Türschließer 10 beaufschlagten Flügels 12. Die Steuer- und/oder Auswerteeinrichtung 28 validiert dabei die vom Positionssensor gelieferten Signale durch Einbeziehen der vom Geschwindigkeitssensor und/oder vom Beschleunigungssensor gelieferten Signale.

Die von der Sensorik 26 erfassten Betriebsgrößen und/oder die Überwachungsergebnisse sind durch die Steuer- und/oder Auswerteeinrichtung 28 insbesondere protokollierbar, signalisierbar, insbesondere anzeigbar, und/oder für einen Abruf bereitstellbar. Durch die Steuer- und/oder Auswerteeinrichtung 28 können in Abhängigkeit von den Überwachungsergebnissen insbesondere auch Wartungsinformationen bereitgestellt und/oder Federmeldungen erzeugt werden.

Zudem kann das Überwachungssystem 24 eine Kommunikationsschnittstelle 30 (vgl. Fig. 3) für eine Ferndiagnose oder dergleichen umfassen.

Die von der Steuer- und/oder Auswerteeinrichtung 28 zu überwachenden Sicherheitsfunktionen des Türschließers 10 können beispielsweise eine vorgebbare maximale Schließzeit des durch den Türschließer 10 beaufschlagten Flügels, ein vorgebbares Schließmoment und/oder einen vorgebbaren Schließmomentverlauf, eine vorgebbare minimale Schließzeit des durch den Türschließer 10 beaufschlagten Flügels 12 und/oder dergleichen umfassen.

Alternativ oder zusätzlich kann die Steuer- und/oder Auswerteeinrichtung 28 beispielsweise auch einen Zyklenzähler zum Zählen der Öffnungs- und/oder Schließzyklen des durch den Türschließer 10 beaufschlagten Flügels 12 umfassen.

Die von der Sensor 26 erfassten Betriebsgrößen können durch die Steuer- und/oder Auswerteeinrichtung 28 zumindest teilweise kontinuierlich analysiert oder ausgewertet werden. Grundsätzlich ist jedoch auch eine lediglich zeitweise, beispielsweise periodische, Analyse oder Auswertung denkbar.

Die Steuer- und/oder Auswerteeinrichtung 28 und zugeordnete Sensorik 26 können zudem zur Erfassung der Betriebsdauer des Türschließers 10 ausgeführt sein. Die Steuer- und/oder Auswerteeinrichtung 28 kann insbesondere wenigstens einen Mikrocontroller umfassen.

Wie in Fig. 1 dargestellt, kann die Sensorik 26 und/oder die Steuer- und/oder Auswerteeinrichtung 28 zumindest teilweise im Türschließer 10 integriert sein. Die Sensorik 26 und/oder die Steuer- und/oder Auswerteeinrichtung 28 kann jedoch zumindest teilweise auch modular und insbesondere als nachrüstbares Modul ausgeführt sein.

Die Sensorik 26 des erfindungsgemäßen Uberwachungssystems 24 kann, neben dem Positionssensor und dem Geschwindigkeits- und/oder Beschleunigungssensor, zudem wenigstens eine oder mehrere der folgenden Sensoren umfassen:
- wenigstens einen Näherungs- und/oder Bewegungssensor wie insbesondere einen Aktiv-Infrarot-Sensor oder dergleichen;
- wenigstens einen Sensor zur Erfassung der Zeit;
- wenigstens einen Sensor zur Erfassung des durch den Türschließer 10 erzeugten Schließmoments;
- wenigstens einen Drucksensor zur Erfassung des Drucks in einem im Gehäuse des Türschließers 10 enthaltenen Dämpfungsmedium, insbesondere Hydraulikflüssigkeit wie beispielsweise Öl.

Die Steuer- und/oder Auswerteeinrichtung 28 kann dazu ausgeführt sein, durch Differentiation der durch den Positionssensor erfassten Position des durch den Türschließer 10 beaufschlagten Flügels die Geschwindigkeit des Flügels 12 und daraus die aktuelle Schließzeit des Flügels 12 zu ermitteln.

Alternativ oder zusätzlich kann die Steuer- und/oder Auswerteeinrichtung 28 auch dazu ausgeführt sein, zu überprüfen, ob die erfasste bzw. ermittelte Schließzeit des durch den Türschließer 10 beaufschlagten Flügels 12 innerhalb eines durch eine vorgebbare minimale Schließzeit und eine vorgebbare maximale Schließzeit bestimmten Zeitintervalls liegt.

Alternativ oder zusätzlich kann die Steuer- und/oder Auswerteeinrichtung 28 auch dazu ausgeführt sein, anhand der durch den Positionssensor gelieferten Signale die Öffnungs- und/oder Schließzyklen des durch den Türschließer 10 beaufschlagten Flügels 12 zu zählen.

Alternativ oder zusätzlich kann die Steuer- und/oder Auswerteeinrichtung 28 auch dazu ausgeführt sein, anhand der durch den Positionssensor gelieferten Signale eine jeweilige Brandschutzfunktion und/oder die Schließgeschwindigkeit des durch den Türschließer 10 beaufschlagten Flügels 12 zu überwachen. Gegebenenfalls kann der sich schließende Flügel 12 durch die Steuer- und/oder Auswerteeinrichtung 28 somit insbesondere auch abgebremst werden.

Dadurch, dass die Steuer- und/oder Auswerteeinrichtung 28 die vom Positionssensor gelieferten Signale durch Einbeziehen der vom Geschwindigkeitssensor und/oder der vom Beschleunigungssensor gelieferten Signale validiert, wird die Sicherheit der Überwachung entsprechend erhöht.

Darüber hinaus kann die Steuer- und/oder Auswerteeinrichtung 28 insbesondere auch dazu ausgeführt sein, die vom Positionssensor gelieferten Signale mit den vom Beschleunigungssensor und/oder mit den vom Näherungs- und/oder Bewegungssensor gelieferten Sensorsignalen insbesondere zur Erkennung eines Bruches einer Abtriebs- oder Schließerachse des Türschließers 10, eines Bruchs im Tür- oder Fensterbeschlag, von Manipulationen am Türschließer 10 und/oder am Beschlag und/oder dergleichen zu kombinieren.

Alternativ oder zusätzlich ist auch eine solche Ausführung der Steuer- und/oder Auswerteeinrichtung 28 denkbar, bei der diese die Beschleunigung des durch den Türschließer 10 beaufschlagten Flügels 12 durch zweifache Differentiation der durch den Positionssensor erfassten Position und/oder durch einfache Differentiation der vom Geschwindigkeitssensor erfasste Geschwindigkeit des durch den Türschließer 10 beaufschlagten Flügels 12 beim Schließen ermittelt, um daraus ein Maß für das Schließmoment zu erhalten.

Alternativ oder zusätzlich kann die Steuer- und/oder Auswerteeinrichtung 28 auch dazu ausgeführt sein, anhand der vom Sensor zur Erfassung der Zeit gelieferten Signale die Verweilzeit des Flügels 12 nach einer Öffnung in einer Ruheposition zu ermitteln, um insbesondere eine Feststellung des Flügels 12 in der Offenlage zu detektieren.

Alternativ oder zusätzlich ist beispielsweise auch eine solche Ausführung der Steuer- und/oder Auswerteeinrichtung 28 denkbar, bei der diese anhand des vom Drucksensor erfassten Drucks eines Dämpfungsmediums des Türschließers 10 eine Feststellung des Flügels 12 in der Offenlage detektiert.

Wie bereits erwähnt, kann der jeweilige Türschließer10 beispielsweise einen mechanischen Energiespeicher wie beispielsweise eine Federeinheit oder dergleichen umfassen, der mit dem Öffnen des Flügels 12 geladen wird und sich zum Schließen des Flügels 12 entlädt. Der jeweilige Türschließer 10 kann beispielsweise mit einer hydraulischen und/oder einer generatorischen Dämpfung versehen sein.

Die Energieversorgung des Überwachungssystems 24 bzw. der Sensorik 26 und der Steuer- und/oder Auswerteeinrichtung 28 kann über das Netz und/oder eine Batterie und/oder Akkumulator erfolgen. Das erfindungsgemäße System 24 ist sowohl bei hydraulisch gedämpften als auch bei generatorisch gedämpften Türschließern anwendbar. Bei generatorisch gedämpften Antrieben kann die Energieversorgung zumindest teilweise auch direkt oder gegebenenfalls akkumulatorgepuffert aus der Generatorspannung erfolgen. Die Steuer- und/oder Auswerteeinrichtung 28 bzw. der Mikrocontroller kann alles oder gezielt lediglich einen Teil der Informationen protokollieren. Bei einer festgestellten Manipulation, einem Fehler, einer ausstehenden Wartung und/oder dergleichen kann die Steuer- und/oder Auswerteeinrichtung 28 bzw. der Mikrocontroller eine entsprechende Meldung generieren. Dies kann beispielsweise über wenigstens eine Leuchtdiode oder einen Summer im Türschließer 10 und/oder beispielsweise auch durch ein Funk- oder elektrisches Signal an eine Wartungszentrale erfolgen. Beispielsweise über die erwähnte Kommunikationsschnittstelle 30 ist insbesondere auch eine Ferndiagnose möglich. Aufgrund der erfindungsgemäßen Überwachung kann von einer regelmäßigen Wartung abgesehen und stattdessen lediglich bedarfsweise eine Wartung durchgeführt werden.

### Bezugszeichenliste

- 10: Türschließer
- 12: Flügel
- 14: Zarge
- 16: Abtriebswelle
- 18: Hebelanordnung
- 20: Gleitschiene
- 22: Gleitarm
- 24: Überwachungssystem
- 26: Sensorik
- 28: Steuer- und/oder Auswerteeinrichtung
- 30: Kommunikationsschnittstelle

## Patentansprüche

1. Türschließer (10) mit einem System (24) zur Überwachung sicherheitsrelevanter Funktionen für den Flügel (12) einer insbesondere als Brandschutzabschluss dienenden Tür, eines Fensters oder dergleichen, mit einer dem Türschließer (10) zugeordneten Sensorik (26) zur Erfassung vorgebbarer Betriebsgrößen des Türschließers (10) und einer mit der Sensorik (26) in Verbindung stehenden Steuer- und/oder Auswerteeinrichtung (28) zur Überwachung der Einhaltung vorgebbarer Sicherheitsfunktionen des Türschließers (10) anhand der von der Sensorik (26) erfassten Betriebsgrößen, wobei die Sensorik (26) umfasst:
- wenigstens einen Positionssensor zur Erfassung der Position des durch den Türschließer (10) beaufschlagten Flügels (12);
wobei die Sensorik (26) ferner umfasst:
- wenigstens einen Geschwindigkeitssensor zur Erfassung der Geschwindigkeit des durch den Türschließer (10) beaufschlagten Flügels (12), und/oder
- wenigstens einen Beschleunigungssensor zur Erfassung der Beschleunigung des durch den Türschließer (10) beaufschlagten Flügels (12);
**dadurch gekennzeichnet, dass** die Steuer- und/oder Auswerteeinrichtung (28) dazu ausgeführt ist, die vom Positionssensor gelieferten Signale durch Einbeziehen der vom Geschwindigkeitssensor und/oder der vom Beschleunigungssensor gelieferten Signale zu validieren.

2. Türschließer (10) nach Anspruch 1,
**dadurch gekennzeichnet, dass** die von der Sensorik (26) erfassten Betriebsgrößen und/oder die Überwachungsergebnisse durch die Steuer- und/oder Auswerteinrichtung (28) protokollierbar, signalisierbar, insbesondere anzeigbar, und /oder für einen Abruf bereitstellbar sind.

3. Türschließer (10) nach Anspruch 1 oder 2,
**dadurch gekennzeichnet , dass** durch die Steuer- und/oder Auswerteeinrichtung (28) in Abhängigkeit von den Überwachungsergebnissen Wartungsinformationen bereitstellbar und/oder Fehlermeldungen erzeugbar sind.

4. Türschließer (10) nach zumindest einem der vorstehenden Ansprüche,
**dadurch gekennzeichnet, dass** es eine Kommunikationsschnittstelle (30) für eine Ferndiagnose umfasst.

5. Türschließer (10) nach zumindest einem der vorstehenden Ansprüche, **dadurch gekennzeichnet, dass** die von der Steuer- und/oder Auswerteeinrichtung (28) zu überwachenden Sicherheitsfunktionen des Türschließers (10) eine vorgebbare maximale Schließzeit des durch den Türschließer (10) beaufschlagten Flügels (12) umfassen.

6. Türschließer (10) nach zumindest einem der vorstehenden Ansprüche, **dadurch gekennzeichnet, dass** die von der Steuer- und/oder Auswerteeinrichtung (28) zu überwachenden Sicherheitsfunktionen des Türschließers (10) ein vorgebbares Schließmoment und/ oder einen vorgebbaren Schließmomentverlauf umfassen.

7. Türschließer (10) nach zumindest einem der vorstehenden Ansprüche, **dadurch gekennzeichnet, dass** die von der Steuer- und/oder Auswerteeinrichtung (28) zu überwachenden Sicherheitsfunktionen des Türschließers (10) eine vorgebbare minimale Schließzeit des durch den Türschließer (10) beaufschlagten Flügels (12) umfassen.

8. Türschließer (10) nach zumindest einem der vorstehenden Ansprüche, **dadurch gekennzeichnet, dass** die Steuer- und/oder Auswerteeinrichtung (28) einen Zyklenzähler zum Zählen der Öffnungs- und/oder Schließzyklen des durch den Türschließer (10) beaufschlagten Flügels (12) umfasst.

9. Türschließer (10) nach zumindest einem der vorstehenden Ansprüche, **dadurch gekennzeichnet, dass** die von der Sensorik (26) erfassten Betriebsgrößen durch die Steuer- und/oder Auswerteeinrichtung (28) zumindest teilweise kontinuierlich analysierbar sind.

10. Türschließer (10) nach zumindest einem der vorstehenden Ansprüche, **dadurch gekennzeichnet, dass** die Steuer- und/oder Auswerteeinrichtung (28) und zugeordnete Sensorik (26) zur Erfassung der Betriebsdauer des Türschließers (10) ausgeführt sind.

11. Türschließer (10) nach zumindest einem der vorstehenden Ansprüche, **dadurch gekennzeichnet, dass** die Steuer- und/oder Auswerteeinrichtung (28) wenigstens einen Mikrocontroller umfasst.

12. Türschließer (10) nach zumindest einem der vorstehenden Ansprüche, **dadurch gekennzeichnet, dass** die Sensorik (26) und/oder die Steuer- und/oder Auswerteeinrichtung (28) zumindest teilweise im Türschließer (10) integriert ist.

13. Türschließer (10) nach zumindest einem der vorstehenden Ansprüche, **dadurch gekennzeichnet, dass** die Sensorik (26) und/oder die Steuer- und/oder Auswerteeinrichtung (28) zumindest teilweise modular und insbesondere als nachrüstbares Modul ausgeführt ist.

14. Türschließer (10) nach zumindest einem der vorstehenden Ansprüche, **dadurch gekennzeichnet, dass** die Sensorik (26) wenigstens eine oder mehrere der folgenden Sensoren umfasst:
- wenigstens einen Näherungs- und/oder Bewegungssensor, wie insbesondere einen Aktiv-Infrarot-Sensor oder dergleichen;
- wenigstens einen Sensor zur Erfassung der Zeit;
- wenigstens einen Sensor zur Erfassung des durch den Türschließer (10) erzeugten Schließmoments;
- wenigstens einen Drucksensor zur Erfassung des Drucks in einem im Gehäuse des Türschließers(10) enthaltenen Dämpfungsmedium, insbesondere Hydraulikflüssigkeit.

15. Türschließer (10) nach Anspruch 14,
**dadurch gekennzeichnet, dass** die Steuer- und/oder Auswerteeinrichtung (28) dazu ausgeführt ist, durch Differentiation der durch den Positionssensor erfassten Position des durch den Türschließer (10) beaufschlagten Flügels (12) die Geschwindigkeit des Flügels (12) und daraus die aktuelle Schließzeit des Flügels (12) zu ermitteln.

16. Türschließer (10) nach zumindest einem der vorstehenden Ansprüche, **dadurch gekennzeichnet, dass** die Steuer- und/oder Auswerteeinrichtung (28) dazu ausgeführt ist, zu überprüfen, ob die erfasste bzw. ermittelte Schließzeit des durch den Türschließer (10) beaufschlagten Flügels (12) innerhalb eines durch eine vorgebbare minimale Schließzeit und eine vorgebbare maximale Schließzeit bestimmten Zeitintervalls liegt.

17. Türschließer (10) nach zumindest einem der vorstehenden Ansprüche, **dadurch gekennzeichnet, dass** die Steuer- und/oder Auswerteeinrichtung (28) dazu ausgeführt ist, anhand der durch den Positionssensor gelieferten Signale die Öffnungs- und/oder Schließzyklen des durch den Türschließer (10) beaufschlagten Flügels (12) zu zählen.

18. Türschließer (10) nach zumindest einem der vorstehenden Ansprüche, **dadurch gekennzeichnet, dass** die Steuer- und/oder Auswerteeinrichtung (28) dazu ausgeführt ist, anhand der durch den Positionssensor gelieferten Signale eine jeweilige Brandschutzfunktion und/oder die Schließgeschwindigkeit des durch des Türschließer (10) beaufschlagten Flügels (12) zu überwachen.

19. Türschließer (10) nach zumindest einem der vorstehenden Ansprüche, **dadurch gekennzeichnet, dass** die Steuer- und/oder Auswerteeinrichtung (28) dazu ausgeführt ist, die vom Positionssensor gelieferten Signale mit den vom Beschleunigungssensor und/oder mit den vom Näherungs- und/oder Bewegungssensor gelieferten Sensorsignalen insbesondere zur Erkennung eines Bruches einer Abtriebs- oder Schließerachse des Türschließers (10), eines Bruchs im Tür- oder Fensterbeschlag, von Manipulationen am Türschließer und/oder am Beschlag und/oder dergleichen zu kombinieren.

20. Türschließer (10) nach zumindest einem der vorstehenden Ansprüche, **dadurch gekennzeichnet, dass** die Steuer- und/oder Auswerteeinrichtung (28) dazu ausgeführt ist, die Beschleunigung des durch den Türschließer (10) beaufschlagten Flügels (12) durch zweifache Differentiation der durch den Positionssensor erfassten Position und/oder durch einfache Differentiation der vom Geschwindigkeitssensor erfassten Geschwindigkeit des durch den Türschließer (10) beaufschlagten Flügels (12) beim Schließen zu ermitteln, um daraus ein Maß für das Schließmoment zu erhalten.

21. Türschließer (10) nach zumindest einem der vorstehenden Ansprüche, **dadurch gekennzeichnet, dass** die Steuer- und/oder Auswerteeinrichtung (28) dazu ausgeführt ist, anhand der vom Sensor zur Erfassung der Zeit gelieferten Signale die Verweilzeit des Flügels (12) nach einer Öffnung in einer Ruheposition zu ermitteln, um insbesondere eine Feststellung des Flügels (12) in der Offenlage zu detektieren.

22. Türschließer (10) nach zumindest einem der vorstehenden Ansprüche, **dadurch gekennzeichnet, dass** die Steuer- und/oder Auswerteeinrichtung (28) dazu ausgeführt ist, anhand des vom Drucksensor erfassten Drucks eines Dämpfungsmediums des Türschließers (10) eine Feststellung des Flügels (12) in der Offenlage zu detektieren.

23. Türschließer (10) nach zumindest einem der vorstehenden Ansprüche, **dadurch gekennzeichnet, dass** der Türschließer (10) einen mechanischen Energiespeicher umfasst, der mit dem Öffnen des Flügels (12) geladen wird und sich zum Schließen des Flügels (12) entlädt.

24. Türschließer (10) nach zumindest einem der vorstehenden Ansprüche, **dadurch gekennzeichnet, dass** der Türschließer (10) mit einer hydraulischen und/oder einer generatorischen Dämpfung versehen ist.

## Claims

1. Door closer (10) having a system (24) for monitoring safety-relevant functions for the wing (12) of a door, window or the like, which serves in particular as a fire protection closure, having a sensor system (26) assigned to the door closer (10) for capturing predefinable operating variables of the door closer (10) and having a control and/or evaluation device (28) connected to the sensor system (26) for monitoring compliance with predefinable safety functions of the door closer (10) based on the operating variables captured by the sensor system (26), wherein the sensor system (26) comprises:
- at least one position sensor for capturing the position of the wing (12) acted on by the door closer (10);
wherein the sensor system (26) also comprises:
- at least one speed sensor for capturing the speed of the wing (12) acted on by the door closer (10), and/or
- at least one acceleration sensor for capturing the acceleration of the wing (12) acted on by the door closer (10);
**characterized in that** the control and/or evaluation device (28) is designed to validate the signals supplied by the position sensor by including the signals supplied by the speed sensor and/or the signals supplied by the acceleration sensor.

2. Door closer (10) according to Claim 1,
**characterized in that** the operating variables captured by the sensor system (26) and/or the monitoring results can be logged, signalled, in particular displayed, and/or provided for retrieval by the control and/or evaluation device (28).

3. Door closer (10) according to Claim 1 or 2,
**characterized in that** maintenance information can be provided and/or error messages can be generated by the control and/or evaluation device (28) on the basis of the monitoring results.

4. Door closer (10) according to at least one of the preceding claims,
**characterized in that** it comprises a communication interface (30) for remote diagnosis.

5. Door closer (10) according to at least one of the preceding claims,
**characterized in that** the safety functions of the door closer (10) to be monitored by the control and/or evaluation device (28) comprise a predefinable maximum closing time of the wing (12) acted on by the door closer (10).

6. Door closer (10) according to at least one of the preceding claims,
**characterized in that** the safety functions of the door closer (10) to be monitored by the control and/or evaluation device (28) comprise a predefinable closing torque and/or a predefinable closing torque curve.

7. Door closer (10) according to at least one of the preceding claims,
**characterized in that** the safety functions of the door closer (10) to be monitored by the control and/or evaluation device (28) comprise a predefinable minimum closing time of the wing (12) acted on by the door closer (10).

8. Door closer (10) according to at least one of the preceding claims,
**characterized in that** the control and/or evaluation device (28) comprises a cycle counter for counting the opening and/or closing cycles of the wing (12) acted on by the door closer (10).

9. Door closer (10) according to at least one of the preceding claims,
**characterized in that** the operating variables captured by the sensor system (26) can be continuously analysed at least in part by the control and/or evaluation device (28).

10. Door closer (10) according to at least one of the preceding claims,
**characterized in that** the control and/or evaluation device (28) and associated sensor system (26) are designed to capture the operating time of the door closer (10).

11. Door closer (10) according to at least one of the preceding claims,
**characterized in that** the control and/or evaluation device (28) comprises at least one microcontroller.

12. Door closer (10) according to at least one of the preceding claims,
**characterized in that** the sensor system (26) and/or the control and/or evaluation device (28) is/are at least partially integrated in the door closer (10).

13. Door closer (10) according to at least one of the preceding claims,
**characterized in that** the sensor system (26) and/or the control and/or evaluation device (28) is/are at least partially modular and in particular designed as a retrofittable module.

14. Door closer (10) according to at least one of the preceding claims,
**characterized in that** the sensor system (26) comprises at least one or more of the following sensors:
- at least one proximity and/or motion sensor, such as in particular an active infrared sensor or the like;
- at least one sensor for capturing the time;
- at least one sensor for capturing the closing torque generated by the door closer (10);
- at least one pressure sensor for capturing the pressure in a damping medium contained in the housing of the door closer (10), in particular hydraulic fluid.

15. Door closer (10) according to Claim 14,
**characterized in that** the control and/or evaluation device (28) is designed to determine the speed of the wing (12) and from this the current closing time of the wing (12) by differentiating the position of the wing (12) acted on by the door closer (10), which position is captured by the position sensor.

16. Door closer (10) according to at least one of the preceding claims,
**characterized in that** the control and/or evaluation device (28) is designed to check whether the captured or determined closing time of the wing (12) acted on by the door closer (10) is within a time interval determined by a predefinable minimum closing time and a predefinable maximum closing time.

17. Door closer (10) according to at least one of the preceding claims,
**characterized in that** the control and/or evaluation device (28) is designed to count the opening and/or closing cycles of the wing (12), which is acted on by the door closer (10), on the basis of the signals supplied by the position sensor.

18. Door closer (10) according to at least one of the preceding claims,
**characterized in that** the control and/or evaluation device (28) is designed to monitor a respective fire protection function and/or the closing speed of the wing (12), which is acted on by the door closer (10), on the basis of the signals supplied by the position sensor.

19. Door closer (10) according to at least one of the preceding claims,
**characterized in that** the control and/or evaluation device (28) is designed to combine the signals supplied by the position sensor with the sensor signals supplied by the acceleration sensor and/or with the sensor signals supplied by the proximity and/or motion sensor, in particular for detecting a break of an output shaft or closer shaft of the door closer (10), a break in the door or window fitting, tampering with the door closer and/or the fitting and/or the like.

20. Door closer (10) according to at least one of the preceding claims,
**characterized in that** the control and/or evaluation device (28) is designed to determine the acceleration of the wing (12) acted on by the door closer (10) by double differentiation of the position captured by the position sensor and/or by single differentiation of the speed of the wing (12) acted on by the door closer (10), as captured by the speed sensor, during closing, in order to obtain a measure of the closing torque therefrom.

21. Door closer (10) according to at least one of the preceding claims,
**characterized in that** the control and/or evaluation device (28) is designed to determine the residence time of the wing (12) in a resting position after opening on the basis of the signals supplied by the sensor for capturing the time, in particular in order to detect fixing of the wing (12) in the open position.

22. Door closer (10) according to at least one of the preceding claims,
**characterized in that** the control and/or evaluation device (28) is designed to detect fixing of the wing (12) in the open position on the basis of the pressure of a damping medium of the door closer (10), as captured by the pressure sensor.

23. Door closer (10) according to at least one of the preceding claims,
**characterized in that** the door closer (10) comprises a mechanical energy storage device which is loaded when the wing (12) is opened and unloads for closing the wing (12).

24. Door closer (10) according to at least one of the preceding claims,
**characterized in that** the door closer (10) is provided with hydraulic and/or regenerative damping.

## Revendications

1. Ferme-porte (10) comprenant un système (24) destiné à la surveillance de fonctions relatives à la sécurité pour le battant (12) d'une porte, d'une fenêtre ou similaire, qui sert notamment de fermeture coupe-feu, comprenant un système de capteur (26) associé au ferme-porte (10) destiné à détecter des grandeurs de fonctionnement pouvant être prédéfinies du ferme-porte (10) et un dispositif de commande et/ou d'évaluation (28) connecté au système de capteur (26) pour surveiller le respect de fonctions de sécurité pouvant être prédéfinies du ferme-porte (10) à l'aide des grandeurs de fonctionnement détectées par le système de capteur (26), le système de capteur (26) comprenant :
- au moins un capteur de position destiné à détecter la position du battant (12) actionné par le ferme-porte (10) ;
le système de capteur (26) comprenant en outre :
- au moins un capteur de vitesse destiné à détecter la vitesse du battant (12) actionné par le ferme-porte (10), et/ou
- au moins un capteur d'accélération destiné à détecter l'accélération du battant (12) actionné par le ferme-porte (10) ;
**caractérisé en ce que** le dispositif de commande et/ou d'évaluation (28) est conçu pour valider les signaux délivrés par le capteur de position en incluant les signaux délivrés par le capteur de vitesse et/ou par le capteur d'accélération.

2. Ferme-porte (10) selon la revendication 1,
**caractérisé en ce que** les grandeurs de fonctionnement détectées par le système de capteur (26) et/ou les résultats de surveillance peuvent être journalisés, signalés, en particulier affichés et/ou mis à disposition pour une consultation par le dispositif de commande et/ou d'évaluation (28).

3. Ferme-porte (10) selon la revendication 1 ou 2,
**caractérisé en ce que** des informations de maintenance peuvent être fournies et/ou des messages d'erreur peuvent être générés par le dispositif de commande et/ou d'évaluation (28) en fonction des résultats de la surveillance.

4. Ferme-porte (10) selon au moins l'une des revendications précédentes,
**caractérisé en ce qu'**il comprend une interface de communication (30) pour un diagnostic à distance.

5. Ferme-porte (10) selon au moins l'une des revendications précédentes,
**caractérisé en ce que** les fonctions de sécurité du ferme-porte (10) à surveiller par le dispositif de commande et/ou d'évaluation (28) comprennent un temps de fermeture maximal pouvant être prédéfini du battant (12) actionné par le ferme-porte (10).

6. Ferme-porte (10) selon au moins l'une des revendications précédentes,
**caractérisé en ce que** les fonctions de sécurité du ferme-porte (10) à surveiller par le dispositif de commande et/ou d'évaluation (28) comprennent un couple de fermeture pouvant être prédéfini et/ou un profil de couple de fermeture pouvant être prédéfini.

7. Ferme-porte (10) selon au moins l'une des revendications précédentes,
**caractérisé en ce que** les fonctions de sécurité du ferme-porte (10) à surveiller par le dispositif de commande et/ou d'évaluation (28) comprennent un temps de fermeture minimal pouvant être prédéfini du battant (12) actionné par le ferme-porte (10).

8. Ferme-porte (10) selon au moins l'une des revendications précédentes,
**caractérisé en ce que** le dispositif de commande et/ou d'évaluation (28) comprend un compteur de cycles destiné à compter les cycles d'ouverture et/ou de fermeture du battant (12) actionné par le ferme-porte (10).

9. Ferme-porte (10) selon au moins l'une des revendications précédentes,
**caractérisé en ce que** les grandeurs de fonctionnement détectées par le système de capteur (26) peuvent être analysées au moins partiellement en continu par le dispositif de commande et/ou d'évaluation (28).

10. Ferme-porte (10) selon au moins l'une des revendications précédentes,
**caractérisé en ce que** le dispositif de commande et/ou d'évaluation (28) et le système de capteur (26) associé sont conçus pour détecter la durée de fonctionnement du ferme-porte (10).

11. Ferme-porte (10) selon au moins l'une des revendications précédentes,
**caractérisé en ce que** le dispositif de commande et/ou d'évaluation (28) comprend au moins un microcontrôleur.

12. Ferme-porte (10) selon au moins l'une des revendications précédentes,
**caractérisé en ce que** le système de capteur (26) et/ou le dispositif de commande et/ou d'évaluation (28) est intégré au moins partiellement dans le ferme-porte (10).

13. Ferme-porte (10) selon au moins l'une des revendications précédentes,
**caractérisé en ce que** le système de capteur (26) et/ou le dispositif de commande et/ou d'évaluation (28) est réalisé au moins partiellement de manière modulaire et en particulier sous la forme d'un module pouvant être installé à postériori.

14. Ferme-porte (10) selon au moins l'une des revendications précédentes,
**caractérisé en ce que** le système de capteur (26) comprend au moins un ou plusieurs des capteurs suivants :
- au moins un capteur de proximité et/ou de mouvement, comme notamment un capteur infrarouge actif ou similaire ;
- au moins un capteur destiné à détecter le temps ;
- au moins un capteur destiné à détecter le couple de fermeture généré par le ferme-porte (10) ;
- au moins un capteur de pression destiné à détecter la pression dans un fluide d'amortissement, en particulier un liquide hydraulique, contenu dans le boîtier du ferme-porte (10).

15. Ferme-porte (10) selon la revendication 14,
**caractérisé en ce que** le dispositif de commande et/ou d'évaluation (28) est conçu pour déterminer la vitesse du battant (12) et, à partir de celle-ci, le temps de fermeture actuel du battant (10) par différenciation de la position du battant (12) actionné par le ferme-porte (12) détectée par le capteur de position.

16. Ferme-porte (10) selon au moins l'une des revendications précédentes,
**caractérisé en ce que** le dispositif de commande et/ou d'évaluation (28) est conçu pour vérifier si le temps de fermeture détecté ou déterminé du battant (12) actionné par le ferme-porte (10) se situe à l'intérieur d'un intervalle de temps déterminé par un temps de fermeture minimal pouvant être prédéfini et un temps de fermeture maximal pouvant être prédéfini.

17. Ferme-porte (10) selon au moins l'une des revendications précédentes,
**caractérisé en ce que** le dispositif de commande et/ou d'évaluation (28) est conçu pour compter les cycles d'ouverture et/ou de fermeture du battant (12) actionné par le ferme-porte (10) à l'aide des signaux délivrés par le capteur de position.

18. Ferme-porte (10) selon au moins l'une des revendications précédentes,
**caractérisé en ce que** le dispositif de commande et/ou d'évaluation (28) est conçu pour surveiller une fonction coupe-feu respective et/ou la vitesse de fermeture du battant (12) actionné par le ferme-porte (10) à l'aide des signaux délivrés par le capteur de position.

19. Ferme-porte (10) selon au moins l'une des revendications précédentes,
**caractérisé en ce que** le dispositif de commande et/ou d'évaluation (28) est conçu pour utiliser les signaux délivrés par le capteur de position avec les signaux de capteur délivrés par le capteur d'accélération et/ou avec les signaux de capteur délivrés par le capteur de proximité et/ou le capteur de mouvement, en particulier en vue de détecter une rupture dans un axe de sortie ou de fermeture du ferme-porte (10), une rupture dans la ferrure de porte ou de fenêtre, des manipulations sur le ferme-porte et/ou sur la ferrure et/ou similaire.

20. Ferme-porte (10) selon au moins l'une des revendications précédentes,
**caractérisé en ce que** le dispositif de commande et/ou d'évaluation (28) est conçu pour déterminer l'accélération du battant (12) actionné par le ferme-porte (10) par double différentiation de la position détectée par le capteur de position et/ou par simple différentiation de la vitesse détectée par le capteur de vitesse du battant (12) actionné par le ferme-porte (10) lors de la fermeture, afin d'obtenir à partir de celle-ci une mesure du couple de fermeture.

21. Ferme-porte (10) selon au moins l'une des revendications précédentes,
**caractérisé en ce que** le dispositif de commande et/ou d'évaluation (28) est conçu pour déterminer, à l'aide des signaux délivrés par le capteur destiné à détecter le temps, le temps de séjour du battant (12) après une ouverture dans une position de repos, afin notamment de détecter une immobilisation du battant (12) dans la position ouverte.

22. Ferme-porte (10) selon au moins l'une des revendications précédentes,
**caractérisé en ce que** le dispositif de commande et/ou d'évaluation (28) est conçu pour détecter une immobilisation du battant (12) dans la position ouverte à l'aide de la pression d'un fluide d'amortissement du ferme-porte (10) détectée par le capteur de pression.

23. Ferme-porte (10) selon au moins l'une des revendications précédentes,
**caractérisé en ce que** le ferme-porte (10) comprend un accumulateur d'énergie mécanique qui est chargé par l'ouverture du battant (12) et se décharge pour fermer le battant (12).

24. Ferme-porte (10) selon au moins l'une des revendications précédentes,
**caractérisé en ce que** le ferme-porte (10) est pourvu d'un amortissement hydraulique et/ou génératif.
